Europäisches Patentamt

European Patent Office

Office européen des brevets

(19)

(11) Numéro de publication: **0 091 850**
**B1**

(12) **FASCICULE DE BREVET EUROPEEN**

(45) Date de publication du fascicule du brevet:
11.06.86

(51) Int. Cl.⁴: **F 17 C 13/02,** G 01 F 23/00,
G 01 F 23/16

(21) Numéro de dépôt: 83400630.6

(22) Date de dépôt: 25.03.83

(54) **Dispositif de régulation automatique du niveau d'hélium à l'état suprafluide dans un réservoir.**

(30) Priorité: 01.04.82 FR 8205644

(43) Date de publication de la demande:
19.10.83 Bulletin 83/42

(45) Mention de la délivrance du brevet:
11.06.86 Bulletin 86/24

(84) Etats contractants désignés:
DE GB NL

(56) Documents cités:
FR - A - 2 010 178

CRYOGENICS, vol. 18, mars 1978, page 183, Guildford, G.B. P.V.E. McCLINTOCK: "Liquid level detector for a pumped bath of He II"

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Bon Mardion, Gilbert, 2, rue du Moucherotte Poisat, F-38320 Eybens (FR)**
Inventeur: **Claudet, Gérard, 20, rue Edouard Vaillant, F-38100 Grenoble (FR)**
Inventeur: **Locatelli, Marcel, 33 Hameau Fleuri Montbonnot, F-38330 Saint Ismier (FR)**

(74) Mandataire: **Mongrédien, André et al, c/o BREVATOME 25, rue de Ponthieu, F-75008 Paris (FR)**

LIBER, STOCKHOLM 1986

## Description

L'alimentation à niveau constant d'un réservoir contenant un liquide quelconque susceptible de s'écouler ou de s'évaporer nécessite d'effectuer les differentes opérations de détection du niveau, d'interprétation du signal recueilli puis, à partir de là, d'action sur le débit d'entrée du liquide dans le reservoir.

Quand le liquide est de l'hélium dont la temperature d'ébullition, fonction de la pression de vapeur, peut évoluer dans la gamme de 1 à 5 degrés absolus, une des conditions essentielles à satisfaire est de limiter autant que possible les entrées de chaleur sur le bain à contrôler.

Les moyens généralement utilisés pour la mesure du niveau d'hélium sont, soit les sondes capacitives ou les sondes supraconductrices qui donnent une mesure continue, soit les sondes ponctuelles à resistance qui donnent un signal par "tout ou rien".

Le signal, en général électrique, est recueilli et traité par des moyens électroniques opérant à température ambiante où ils actionnent la commande électrique ou pneumatique d'une vanne de régulation dont l'élément actif froid (siège et pointeau) commande le débit d'alimentation nécessaire.

Dans le cas particulier où l'hélium considéré est à l'état suprafluide, à une température inférieure à $T_\lambda = 2,17°$K, des propriétés très particulières apparaissent qui peuvent être utilement mises à profit pour permettre, soit la détection d'une interface liquidegaz, soit le controle de sa position. Ces propriétés très curieuses sont liées à l'existence d'un isomère de l'hélium, l'hélium II, qui n'apparaît qu'au-dessous de $T_\lambda$ et qui est cause, en particulier, de l'absence d'un point triple de l'hélium dont les courbes de tension de vapeur et de fusion ne se rencontrent pas.

Parmi les propriétés utilisables qui n'apparaissent que dans la phase liquide suprafluide de l'helium, figurent l'effet de pression Fontaine et le phénomène dit du film de Rollin dont on rappelle ci-dessous succinctement les particularités essentielles pour faciliter la compréhension du dispositif objet de la présente invention.

### I. L'effet de Pression Fontaine:

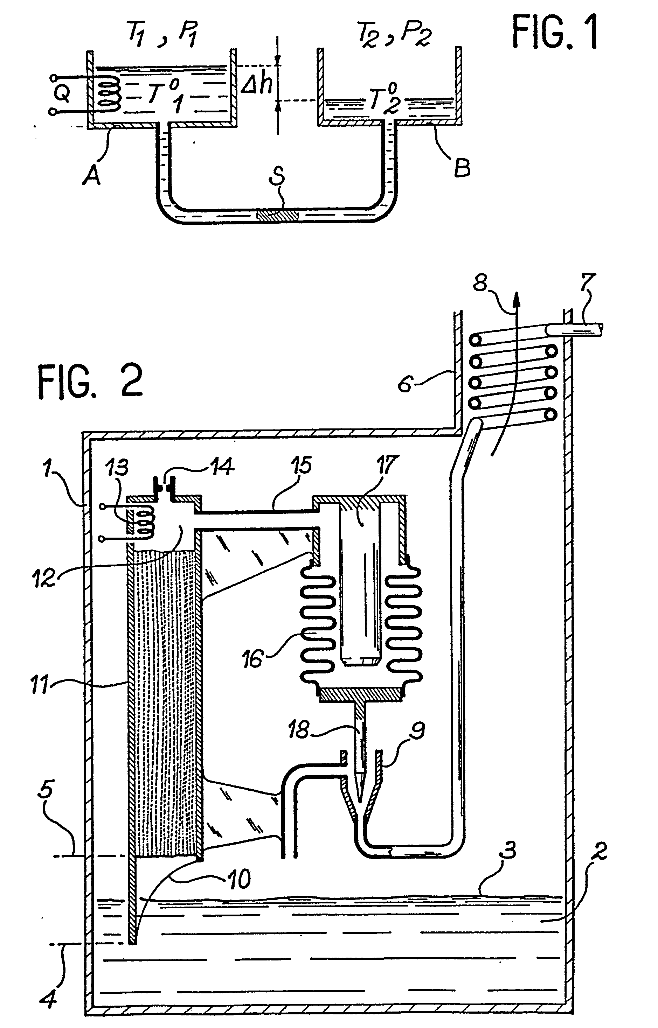

Sur la figure 1 qui représente l'état connu de la technique, les réservoirs A et E contenant de l'hélium suprafluide sont reliés par l'intermédiaire d'une "suprafuite" S. Une telle suprafuite, généralement réalisée en comprimant dans un tube un matériau pulvérulent de faible granulométrie, a la propriété de présenter une porosité telle qu'un fluide classique comme l'helium normal soit pratiquement incapable de circuler alors que la phase suprafluide de l'hélium, dont la viscosité apparente est nulle, peut s'écouler librement.

Dans ces conditions, un apport de chaleur Q sur le réservoir A tel que la température T1 soit maintenue à une valeur supérieure à celle T2 de l'autre réservoir B, fait apparaître une difference de niveau Δh qui traduit en fait l'existence d'une différence entre les pressions $P_1$ et $P_2$ au fond de chaque réservoir:.

$T_1 > T_2 \rightarrow P_1 > P_2$

Si la température est inférieure à $T_\lambda = 2,17°$K, l'écart de pression que l'on peut espérer atteindre dans le cas idéal s'écrit:.

$\Delta P = \int_{T2}^{T1} 23.T^{5,6}\, dT$ pour $1,3°$K $< T < T_\lambda$

Cet effet porte couramment le nom d'effet Fontaine.

Pratiquement avec des écarts de température, de quelques dixièmes de degré, des pressions de quelques centaines de torrs peuvent aisément être obtenues. A titre indicatif, on peut noter que pour les mêmes écarts de température la différence de pression de vapeur saturante n'est que de quelques torrs.

### II. Le film de Rollin.

L'hélium liquide à l'état suprafluide, conservant une tension superficielle non nulle alors que sa viscosité est nulle, est capable de mouiller les parois des réservoirs de façon parfaite en montant éventuellement sur une paroi isotherme.

Le débit capable d'être transporté par ce film est, en première approximation, proportionnel au périmètre mouillé avec, comme ordre de grandeur, vers $T = 1,8°$K, des valeurs de débit d'environ $5.10^{-5}$ cm³/s/cm.

La présente invention a précisément pour objet un dispositif de régulation automatique du niveau d'hélium à l'état suprafluide dans un réservoir, qui fait appel aux propriétes particulières connues et rappelées ci-dessus de l'hélium suprafluide, c'est-à-dire à l'effet de pression Fontaine et à l'effet de film dit de Rollin.

Ce dispositif de régulation automatique se caractérisé essentiellement en ce qu'il comporte dans le réservoir au dessus du liquide:

- une canalisation d'alimentation du réservoir en hélium suprafluide,;

- un corps de prélèvement d'hélium suprafluide par production spontanée sur sa surface d'un film dit de Rollin, situé sensiblement au niveau horizontal auquel on désire réguler la surface libre de l'helium dans le réservoir et dont le périmètre de prélèvement, variable en fonction de l'altitude, augmente sur une hauteur égale à la tolérance d'évolution du niveau depuis sa base jusqu'à une valeur maximale à son point de jonction supérieur avec une suprafuite qui lui est associée et que traverse ensuite l'hélium suprafluide ainsi prélevé;

- une chambre chauffée dans laquelle débouche la suprafuite et qui communique, d'une part avec un orifice d'échappement à débit contrôlé vers l'atmosphère du réservoir et, d'autre part, avec une chambre à parois déformables souples et à volume variable, lesdites parois provoquant, lors de leur extension ou de leur rétraction, le déplacement d'une tige dont la position est ainsi caractéristique du niveau de l'hélium dans le réservoir;

- des moyens pour asservir l'arrivée d'hélium dans la canalisation d'alimentation du réservoir à la position de la tige.

Selon l'invention, le prélèvement d'hélium liquide à l'état suprafluide dans son réservoir a lieu à la surface de séparation liquide gaz par un corps de prélèvement partiellement immergé dans le liquide et le long duquel se constitue un film de Rollin. Le fait que, conformément à l'invention, la surface de prélèvement de ce corps soit variable en fonction de l'altitude, permet d'obtenir un prélèvement d'autant plus important que le niveau de séparation de la phase liquide et de la phase gazeuse est plus élevé.

La suprafuite qui fait suite à ce corps de prélèvement permet, en utilisant les calories apportées par une résistance chauffante dans la chambre associée, de créer une surpression dans cette chambre par effet Fontaine et c'est celle-ci que l'on utilise pour gonfler en quelque sorte une chambre à parois déformables et élastiques et obtenir le déplacement d'une tige liée auxdites parois. Ce deplacement représente, analogiquement, les variations d'altitude de la surface d'hélium suprafluide.

L'asservissement du débit d'arrivée d'hélium liquide suprafluide dans la canalisation d'alimentation du réservoir à la position de cette tige peut être obtenu par tout moyen classique connu; selon une caractéristique originale de l'invention toutefois, la camalisation d'alimentation du réservoir comporte une vanne d'admission dont la tige précédente constitue directement le pointeau. De cette façon, le pointeau ayant des déplacements qui représentent exactement ceux de la surface de séparation hélium liquide-hélium gazeux que l'on veut précisément réguler, il suffit de régler cette vanne pour que sa fermeture ait lieu lorsque le niveau d'hélium suprafluide dans le réservoir atteint l'altitude de régulation souhaitée.

Le chauffage de la chambre dans laquelle débouche la suprafuite, peut être obtenu par tout moyen connu et notamment être realisé à l'aide d'une simple résistance électrique. Tout autre procédé de chauffage, par rayonnement ou conduction thermique à partir de zones à température plus élevée est également utilisable ainsi par exemple qu'un échange de chaleur avec l'hélium pénétrant dans la canalisation d'alimentation du réservoir. La seule condition à respecter est de fournir à cette chambre une quantité de calories suffisante pour que la pression Fontaine engendrée par la différence de température entre le réservoir et la chambre soit suffisante pour assurer le gonflement de la chambre à parois déformables et le déplacement de la tige réglant l'admission.

De toute façon, l'invention sera mieux comprise en se référant à la description qui suit d'un exemple de mise en oeuvre, donné à titre illustratif et non limitatif, en se référant a la figure 2 qui représente en coupe schématique un réservoir contenant de l'hélium suprafluide.

Sur cette figure 2, on a représenté le réservoir 1 qui contient de l'hélium liquide suprafluide 2 dont la surface de séparation 3 avec la phase gazeuse supérieure doit être maintenue automatiquement entre certaines limites définies niveau 4 et 5. Le réservoir 1 est bien entendu mis en communication par la conduite 6 avec les moyens de pompage adaptés à l'obtention des pressions et températures désirées. Une canalisation d'alimentation 7 débouche dans la conduite 6 du réservoir 1 d'abord sous la forme d'un serpentin permettant l'échange de calories avec les vapeurs froides qui s'échappent du réservoir selon le trajet de la flèche 8, puis cette canalisation descend jusqu'au voisinage de la surface 3 en passant par une vanne d'admission 9.

L'alimentation du réservoir 1 se fait par la canalisation 7 à l'aide de fluide qui peut être soit de l'hélium liquide, soit de l'hélium gazeux à des pressions et températures telles qu'après détente dans la vanne 9, l'hélium soit transformé en sa variété suprafluide.

Selon l'invention, un corps de prélèvement d'hélium suprafluide 10 est prévu entre le niveau 4 et 5 et possède une surface de prélèvement variable depuis la valeur nulle au niveau 4 jusqu'à la valeur maximale au niveau 5.

Le corps de prélèvement 10 de section variable peut être réalisé de différentes façons, et l'on peut citer, par exemple, des tubes évasés, des plaques, des fils, ou des tiges frittés. L'essentiel est que le périmètre en contact avec l'hélium suprafluide 2 soit variable en augmentant régulièrement depuis le niveau 4 jusqu'au niveau 5. Dès que le niveau 4 est atteint par la surface 3 de l'hélium suprafluide, un film de Rollin se crée qui monte le long du corps de prélèvement 10. Le débit de l'hélium ainsi prélevé augmente progressivement quand le niveau du liquide 3 s'élève pour atteindre sa valeur maximale lorsque le niveau 5 est luimeme atteint par la surface 3 de séparation.

Conformément à l'invention, le corps de prelèvement 10 est associé à une suprafuite 11 constituée d'une canalisation dans laquelle on a placé un matériau pulvérulent de faible granulométrie.

Cette suprafuite 11 débouche à son tour dans une chambre 12 chauffée, ce qui est symbolisé sur la figure 2 par la présence d'une résistance électrique 13 située dans cette chambre, étant bien entendu, comme déjà expliqué précédemment, que tout autre moyen de chauffage équivalent peut être aussi bien utilisé sans que l'on sorte pour autant du cadre de la présente invention. Cette chambre 12 communique avec un orifice d'échappement à débit contrôlé 14 et, par le conduit 15, avec une chambre à parois déformables souples, élastiques et à volume variable 16 dont les parois en forme de soufflets peuvent se déplacer en translation le long d'un noyau de guidage vertical 17. L'extrémite des parois déformables de la chambre 16, en forme de soufflets, est reliée à la tige métallique 18 qui constitue, dans l'exemple de la figure 2, le pointeau de la vanne 9.

Le fonctionnement du dispositif de la figure 2 est le suivant.

Le débit d'hélium suprafluide prélevé par le corps de prélèvement 10 traverse la suprafuite 11 et pénètre dans la chambre 12 où l'effet Fontaine dû au chauffage par la résistance 13 développe une pression, communiquée à la chambre 16 laquelle en se dilatant provoque le déplacement de la tige métallique 18. L'orifice d'échappement 14 dont la taille est réglée à une valeur déterminée garantit l'existence d'une pression gazeuse maximale dans la chambre 12. Lorsque le niveau 3 de l'hélium suprafluide descend en dessous du niveau 4, il n'y a plus d'hélium prélevé, ni d'hélium sous pression dans la chambre 12, l'orifice d'échappement 14 permettant de décharger totalement la pression qui pouvait régner dans les chambres 12 et 16, la tige 18 se rétracte au maximum en montant vers le haut du réservoir 1, libérant ainsi l'ouverture de la vanne 9, ce qui permet l'introduction d'une nouvelle quantité d'hélium et la montée du niveau 3.

Autrement dit, la tige 18 et le niveau 3 se déplacent verticalement à tout instant en sens inverse.

Lorsqu'au contraire c'est le niveau 3 qui atteint le niveau 5, la quantité d'hélium suprafluide prélevé dans le système est maximale et par conséquent également la pression dans les chambres 12 et 16; ceci provoque un abaissement également maximal de la tige 18 qui ferme la vanne 9 provoquant ainsi l'arrêt de l'admission de l'hélium.

L'apport de chaleur Q figuré en 13 dans la chambre 12 peut être obtenu par différents moyens tels que chauffage électrique, rayonnement thermique ou conduction solide depuis des zones à température plus élevée. Il peut aussi être réalisé par échange de chaleur avec le fluide pénétrant en 7 et alimentant la vanne 9 pourvu que ce fluide soit à une température convenable.

Les vapeurs froides 8 s'échappant du réservoir 1 peuvent ou non échanger de la chaleur avec le fluide d'alimentation introduit en 7.

Enfin, au lieu d'utiliser directement le pointeau pour régler le débit de liquide entrant, on peut se contenter de mesurer son déplacement par un moyen quelconque et d'interpréter le signal recueilli pour en faire par exemple une sonde de mesure de niveau.

## Revendications

1. Dispositif de régulation automatique du niveau (3) d'hélium à l'état suprafluide dans un réservoir (1), caractérisé en ce qu'il comporte, dans le réservoir, au-dessus du liquide:
- une canalisation d'alimentation (7) du réservoir (1) en hélium suprafluide,;
- un corps de prélèvement (10) d'hélium suprafluide par production spontanée sur sa surface d'un film dit de Rollin, situé sensiblement au niveau horizontal auquel on désire réguler la surface libre de l'hélium dans le reservoir (1) et dont le périmètre de prélèvement, variable en fonction de l'altitude, augmente sur une hauteur égale à la tolérance d'évolution du niveau (4, 5) depuis sa base jusqu'à une valeur maximale à son point de jonction supérieur avec une suprafuite (11) qui lui est associée et que traverse ensuite l'hélium suprafluide ainsi prélevé;
- une chambre chauffée (12) dans laquelle débouche la suprafuite (11) et qui communique, d'une part avec un orifice d'échappement à débit contrôlé (14) vers l'atmosphère du réservoir (1) et, d'autre part, avec une chambre (16) à parois déformables souples, élastiques et à volume variable, lesdites parois provoquant, lors de leur extension ou de leur rétraction, le deplacement d'une tige (18) dont la position est ainsi caractéristique du niveau de l'hélium dans le réservoir,;
- des moyens (9) pour asservir l'arrivée d'hélium dans la canalisation d'alimentation (7) du réservoir à la position de la tige (18).

2. Dispositif de régulation selon la revendication 1, caractérisé en ce que la tige métallique (18) constitue le pointeau d'une vanne d'admission (9) située sur la canalisation (7) d'alimentation du réservoir (1).

3. Dispositif de régulation selon l'une quelconque des revendications 1 et 2 précédentes, caractérisé en ce que le chauffage de la chambre (12) dans laquelle débouche la suprafuite (11) est réglé à un niveau tel que la pression Fontaine engendrée soit suffisante pour assurer la translation de la tige (18).

## Patentansprüche

1. Automatischer Regulator für das Flüssigkeitsniveau (3) für superfluides Helium in einem Behälter (1), dadurch gekennzeichnet, daß er in dem Behälter oberhalb der Flüssigkeit enthält:
- eine Zuführleitung (7) des Behälters (1) für superfluides Helium;
- einen Abzugskörper (10) für superfluides Helium durch spontane Entstehung auf der Oberfläche eines Rollin-Filmes, der im wesentlichen im horizontalen Niveau angeordnet ist, auf das man die freie Oberfläche des Heliums in dem Behälter (1) einregeln will und dessen Abzugsumfang, variabel als Funktion der Höhe, sich über eine Höhe vergrößert, die gleich der Bewegungstoleranz des Niveaus (4, 5) zwischen seinem Grundwert und einem Maximalwert an seinem oberen Verbindungspunkt mit einer Supraableitung (11) ist, die ihm zugeordnet ist und die das so abgeleitete suprafluide Helium in der Folge durchquert;
- eine geheizte Kammer (12), in die die Supraableitung (11) mündet und die einerseits mit einer Auslaßöffnung (14) gesteuerten Auslaßvermögens gegen die Atmosphäre des Behälters (1) und andererseits mit einer Kammer (16) variablen Volumens mit weichen, elastischen verformbaren Wänden in Verbindung steht, wobei die Wände bei ihrer Ausdehnung oder ihrer Zusammenziehung die Verschiebung einer Stange (18) hervorrufen, deren Lage auf diese Weise für das Heliumniveau in dem Behälter charakteristisch
- eine Einrichtung (9), um den Zulauf des Heliums in der Zuführleitung (7) des Behälters an der Position der Stange (18) zu regeln.

2. Regulator nach Anspruch 1, dadurch gekennzeichnet, daß die metallische Stange (18) die Nadel eines Zulaufventils (9) bildet, das in der Zulaufleitung (7) des Behälters (1) angeordnet ist.

3. Regulator nach einem der vorhergehenden Ansprüche 1 und 2, dadurch gekennzeichnet, daß die Heizung der Kammer (12), in die die Supraableitung (11) mündet, auf ein Niveau geregelt ist derart, daß der entwickelte Fontaine-Druck ausreichend ist, um die Verschiebung der Stange (18) sicherzustellen.


**Claims**

1. Automatic regulator for the level (3) of superfluid helium in a reservoir (1) characterised in that it comprises,above the liquid in the reservoir:
- a supply conduit (7) for supplying superfluid helium to the reservoir (1);
- a sampling body (10) for superfluid helium by the spontaneous production on its surface of a Rollin film, situated substantially at the horizontal level at which the free surface of helium in the reservoir (1) is to be regulated, and whose sampling perimeter, which varies with height, increases over a height equal to the permitted variation inliquid level (4,5) from its base to a maximum value at a higher junction with a superleak (11) with which it is associated and which is subsequently traversed by thereby-sampled superfluid helium,
- a heated chamber (12) into which the superleak (11) opens, and which communicates on the one hand with the atmosphere of the reservoir (1) through an escape nozzle (14) of restricted size, and on the other hand with a variable-volume chamber (16) with flexible elastic walls, extension or retraction of said walls producing displacement of a rod (18) whose position is thereby characteristic of the level of helium in the reservoir; and
- means (9) for controlling the passage of helium through the supply conduit (7) of the reservoir as a function of the position of the rod (18).

2. Regulator according to Claim 1, characterised in that the metal rod (18) constitutes the needle of an inlet valve (9) located in the supply conduit (7) of the reservoir (1).

3. Regulator according to either of the preceding Claims 1 and 2, characterised in that heating of the chamber (12) into which the superleak (11) opens, is controlled such that the Fontaine pressure generated is sufficient to produce movement of the rod (18).

0 091 850

FIG. 1

FIG. 2